(19) Europäisches Patentamt
European Patent Office
Office européen des brevets

(11) **EP 2 953 314 A1**

(12) **EUROPEAN PATENT APPLICATION**

(43) Date of publication:
**09.12.2015 Bulletin 2015/50**

(51) Int Cl.:
***H04L 29/06*** (2006.01)    ***H04W 4/00*** (2009.01)
***H04L 29/12*** (2006.01)

(21) Application number: **14305862.6**

(22) Date of filing: **06.06.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
92100 Boulogne-Billancourt (FR)**

(72) Inventor: **Le Gall, Jean-Christophe
44708 Orvault (FR)**

(74) Representative: **Therias, Philippe
Alcatel-Lucent International
148/152 route de la Reine
92100 Boulogne-Billancourt (FR)**

(54) **Method, network device, system and computer-readable medium for estimating a communication service**

(57)    A method for estimating a communication service usable to establish a communication link between at least two network devices, one of the network devices is said the calling party and one other of the network devices is said called party. The method comprises a first step of determining a first list of at least one communication service usable by the calling party, a second step of determining a second list of at least one communication service usable to reach the called party. The method also comprises a first step of estimating at least one communication service common to the first and second list associated to priority level-A and priority level-B and a second step of estimating the usable communication service using the common communication services, the priority level-A and/or the priority level-B.

**Fig. 2**

**Description**

FIELD OF INVENTION

The present subject matter relates to the estimation of a communication service usable to establish a communication link between a plurality of network devices.

BACKGROUND

In the telecom industry, there are some initiatives to integrate, in a generic manner, different communication services usable to interconnect different network devices. The aim is to have real time communication services available to the web applications or applications to their transmission needs.

The introduction of the Application Programming Interface (API) ORCA (Open Real time Communications API) offers a way to design web servers using real time communication. The aim of ORCA is to have a generic API to manage the real time communication services from a web browser. In other word ORCA offers an Open Real time Communications API that allows a simplification addition of Real time Communications to applications. The API ORCA is an open source project that provides in the client side a call control APIs.

SUMMARY

This summary is provided to introduce concepts related to the estimation of a communication service usable to establish a communication link between a plurality of network devices.

In one implementation, a method for estimating a communication service is described. This communication service is usable to establish a communication link between at least two network devices. One of the network devices is said the calling party and one other of the network devices is said called party. The method comprises a first step of determining a first list of at least one communication service. This communication service is usable reach the called party. The method also comprises a second step of determining a second list of at least one communication service usable by the calling party. The method also comprises a first step of estimating at least one communication service common to the first and second list. The common communication service is associated to a priority level, so called priority level-A, when used by the calling party and another priority level, so called priority level-B, when used by the called party. The method also comprises a second step of estimating the usable communication service using the common communication services, the priority level-A and/or the priority level-B.

In another implementation a network device is described. This network device is said the calling party. The network device comprises at least one processor; and at least one memory coupled to the processor. The memory comprises a first determination module configured to determine a first list of at least one communication service usable by the calling party, a second determination module configured to determine a second list of at least one communication service usable to reach another network device said called party. The memory also comprises a first estimation module configured to estimate at least one communication service common to the first and second list, the common communication service is associated to a priority level, so called priority level-A, when used by the calling party and another priority level, so called priority level-B, when used by the called party. The memory also comprises a second estimation module configured to estimate the usable communication service using the common communication services, the priority level-A and/or the priority level-B.

In another implementation a system is described. The system comprises a first network device, said calling party. The first network device comprises at least one first processor; and at least one first memory coupled to the first processor. The system also comprises a second network device, said called party. The second network device comprises at least second first processor and at least one second memory coupled to the second processor. The second memory comprises a first determination module configured to determine a first list of at least one communication service usable to reach the called party. The first memory comprises a second determination module configured to determine a second list of at least one communication service usable by the calling party. The first memory also comprises a first estimation module configured to estimate at least one common communication service who is common to the first and second list, the common communication service is associated to a priority level, so called priority level-A, when used by the calling party and another priority level, so called priority level-B, when used by the called party and a second estimation module configured to estimate a communication service, usable to establish a communication link between the calling and the called party, this second estimation is made using the common communication services, the priority level-A and/or the priority level-B.

In another implementation a computer-readable medium is described. This computer-readable medium has embodied thereon a computer program for executing a method for estimating a communication service usable to establish a communication link between at least two network devices. One of the network devices is said calling party and one other of the network devices is said called party. The method comprises a first step of determining a first list of at least one communication service usable by the calling party and a second step of determining a second list of at least one communication service usable to reach the called party. The method also comprises a first step of estimating at least one communication service common to the first and second list, the common communication service is associated to a priority level, so called priority level-A, when used by the calling party and another priority level, so called priority level-A, when used by the called party and a second step of estimating the communication service using the common communication services, the priority level-A and/or the priority level-B.

BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 illustrates an exemplary of a network device using the method and an exemplary IMS network used to transmit the data.

Figure 2 presents a method for estimating a communication service usable to establish a communication link between at least two network devices.

Figure 3 presents an embodiment of the functional architecture of the method for estimating a communication service.

Figure 4 presents an exemplary embodiment of the data base used by the method object of the present subject matter and an exemplary way of filling and updating this database.

Figure 5 presents an embodiment of the functional architecture of the method for estimating a communication service.

Figure 6 presents an embodiment of the data base used by the method object of the present subject matter and an exemplary way of filling and updating this database.

Figure 7 presents the use of the method for estimating a communication service usable to establish a communication link between at least two network devices.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

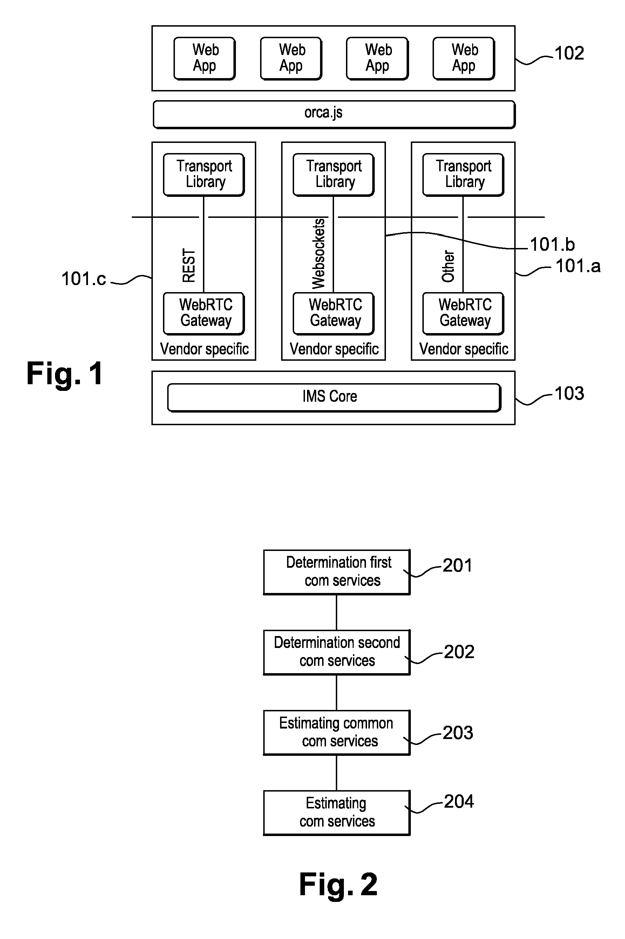

The figure 1 presents a communication system description where a network device implements one of the communication services (101.a to 101.c) in order to establish a communication with another network device not presented in this figure. This communication is realized across an IMS (IP Multimedia Subsystem) network. This other network device may have the same architecture as the network device presented on this figure or is an IMS aware device. In this figure, the communications services use WebRTC API. The WebRTC is an API that supports browser-to-browser applications and browser to telecom operator services (because the telecom operator network has a gateway with the WebRTC). The WebRTC also supports voice calling, video chat, and peer to peer communication without the need of specific plug-in. In the figure 1 the communications is realized across a network based on an IMS (IP Multimedia Subsystem) core 102. In this system an ORCA library is placed as an overlay layer. This type of system can be used for example in different applications 103 for example this method can be used by web call applications.

However this system doesn't allow to take into account:

- The different available real time communication services of different telecom operators that the client may have subscribed or not. For example the designer of the web application using ORCA/webrtc API doesn't know if the telecom operator of the client has a WebRTC gateway and if the client has subscribed to such service.
- When the network device is a user device, a terminal and/or a web browser the capacity and limitation of this device.
- When there are several communication services available on both sides, the different communication services that one of the party want preferably used. For example this system doesn't take into account that a web client user wants to communicate with some specific communications services.
- Over-the-top (OTT) communication services that provide communication services over the Internet and bypass traditional communication services. Communication services that come over the top are most typically related to media and communication and are generally, if not always, lower in cost than the traditional communication services. For example the OTT communication services can be Skype or Google Hangouts (previously Googletalk).

Even if the ORCA generic web browser APIs have been defined for access directly to operator Telecom network, this API still required a communication service library per operator. The communication service libraries are dependent of a sole telecom operator because the interface of the library is based on REST API or on WebSockets. REST is the acronym of Representational state transfer. REST is a network architecture wherein a coordinated set of architectural constraints are applied to components, connectors, and data elements, within the said network architecture. WebSocket is a protocol providing full-duplex communications channels over a single TCP connection.

So each web application needs to be designed or at least customized for the communication service libraries of each different telecom operators. The web application of a telecom operator is not usable by other telecom operator considering the communication service libraries on which this web application is based. With the ORCA solution there is no defined method to select the communication service library because in web browser client there is no mean to know the communication system used by the network device.

The communication system comprises the telecom operator of the network device, the system communication libraries that can be used by this telecom operator and the capabilities/subscriptions of this particular client of the telecom operator, associated to the network device.

The figure 2 presents a method for estimating a communication service usable to establish a communication link between at least two network devices. One of the network devices is said the calling party and one other of the network devices is said the called party. The method comprises a first step 201 of determining a first list of at least one communication service usable by the calling party. The method also comprises a second step 202 of determining a second list of at least one communication service usable to reach the called party. The method further comprises a first step 203 of estimating at least one common communication service who is common to the first and second list. Each common communication services are associated to a priority level, so called priority level-A, when used by the calling party and another priority level, so called priority level-B, when used by the called party. Finally the method comprises a second step 204 of estimating the usable communication service using the common communication services, the priority level-A and/or the priority level-B.

In another embodiment of the method object of the present subject matter, the first step of determination and/or the second step of determination are configured to use a data base. This data base comprises for at least one network device a plurality of communication services respectively associated to the priority level-A and/or the priority level-B.

This database can be integrated in a centralized way inside a dedicated network element of this database can be integrated in a distributed way and be placed in all or in all some of the network device.

In an embodiment a centralized data base is used. This centralized data base is accessible per the network device and/or web application.

In an embodiment a distributed data base is used. When using this distributed data base:

the information of calling party are in his/her own environment and the information of the called party are in his/her environment. By environment we mean the user device storage or a dedicated remote storage located for example inside the cloud and/or

the date base of the called party is not accessed directly from the calling party or from the web application. The access to the data base of called/calling party is done through a control protocol and/or

the date base of the calling party is not accessed directly from the called party or from the web application. The access to the data base of called/calling party is done through a control protocol for example an HTTP base protocol as SOAP. HTTP stands for HyperText Transfer Protocol and SOAP stands for Simple Object Access Protocol.

In another embodiment the priority level-A and/or the priority level-B is associated to common communication services via a category associated to the called party and the calling party. In other words each called party (respectively calling party) is associated to a category and each category is then associated to a priority level-A (respectively priority level-B). In an embodiment the determination of the category is realized by using the information of the database associated to the called party.

The different categories are for example family, friends, colleagues, other etc.

In another embodiment the first list of at least one communication service usable to reach the called party is determined by using an information describing the capabilities of the calling device and/or an information describing the capabilities of the called device and/or an information of category of the calling party. The second list of at least one communication service usable by the calling party is also determined by using an information describing the capabilities of the calling device and/or an information describing the capabilities of the called device and/or an information of category of the calling party. The information is retrieved from the contact list of the called party by reading the entry of calling party.

In another embodiment if there is no common communication service, the communication is not established or the calling party may try to reach the called party by mean of another communication services (for example by voice or email...).

So the method of this embodiment provides a mean to solve the problems described above by proposing to web designer one generic API to launch the best real time communication service from the web browser.

In other words, behind the generic APIs there is a module which allows the selection of the best communication service. This selection is realized using a method based on:

- The capabilities of the network device (the network device can be for example a terminal and/or a web browser). For example the capability of the network device to support of WebRTC services.

- The communication services, which are embedded or subscribed by the network device. The communication services are for example OTT communication services like Skype, ORCA API of his/her Telecom operator, WebRTC solution. The communication services subscribed are for example Voice over IP (VoIP), Video, and Voice High Definition.

The idea is to make transparent, to the application, the selection of the communication service and implicitly to make independent, to the application, the choice of the communication services of the operator subscribed by the user.

One of the advantages of the method according to this embodiment is to simplify the interactions between the telecom services and the application.

In an embodiment the network device is a web browser that supports the interaction with some communication services. In the network a module integrated in a device allows the selection of the best communication service based on:

The telecom operator/OTT services that the user of the web browser has subscribed.

The profile of the user of the web browser, this profile is included in a database of the telecom operator or in the Database of the generic API provider. This data base indicates the services subscribed by the user of the web browser, for example voice service only, video service only, voice HD.

The type of communication service needed by the web client (for example point to point communication, chat...).

Generally, each telecom operator will have a different WebRTC communication service library. Some telecom operators might use REST and other telecom operators might use WebSockets with or without SIP embedded solution. Depending of the profile of the user in his/her telecom operator information, the web browser of the user may have restricted access to only some type of communication services. For example the user may only be allowed to reach some people or may be allowed to use only some specified services to reach some people. For example the user may use voice and video services with some users but can use high definition voice service with only another category of users.

When using this embodiment the web pages of the web applications can integrate one or more web buttons to make a call or start a chat session with a remote party. When the web client user submits the request of communication (for example by pressing the "submit" button), a central application in the cloud is called to retrieve the telecom operator and the user's profile of the user of the web client in a central database or in a database distributed in each user device. Then after the selection of the best communication service, the establishment of the real time communication is started in web client environment based on the retrieved information.

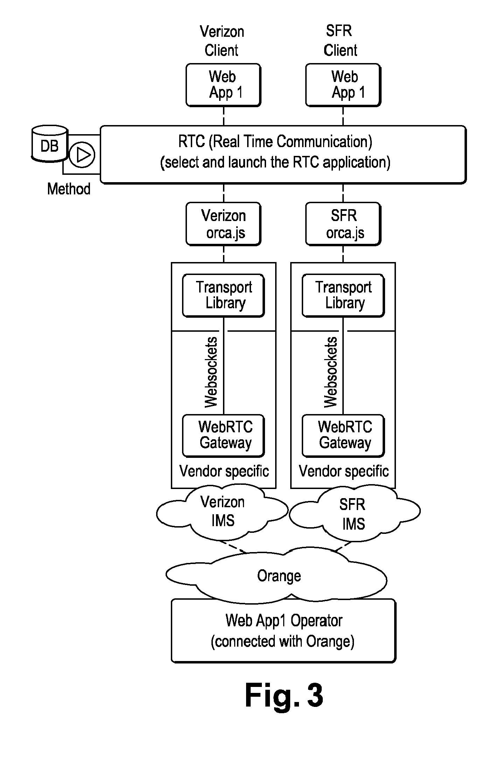

The figure 3 presents an exemplary embodiment of the functional architecture of the method object of the present subject matter. In this functional architecture the WebRTC communication service library, at web client side, can use two different telecom operators said Verizon and SFR. In other words using the method of the present subject matter the web client can load the most efficient communication service library based on the user's profile of web client.

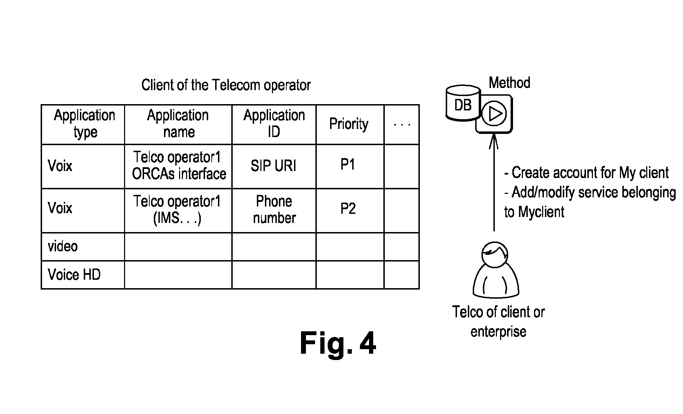

The figure 4 presents an exemplary embodiment of the data base used by the method object of the present subject matter. This data base is provisioned with the different options the client has subscribed for each telecom operator. This data base is provisioned during the creation of the client and is called during the triggering of the service communication. This data base also contains the categories of the different users. This figure also presents how this database can be filled or updated, this can be done by the telecommunication operator of the client or the enterprise.

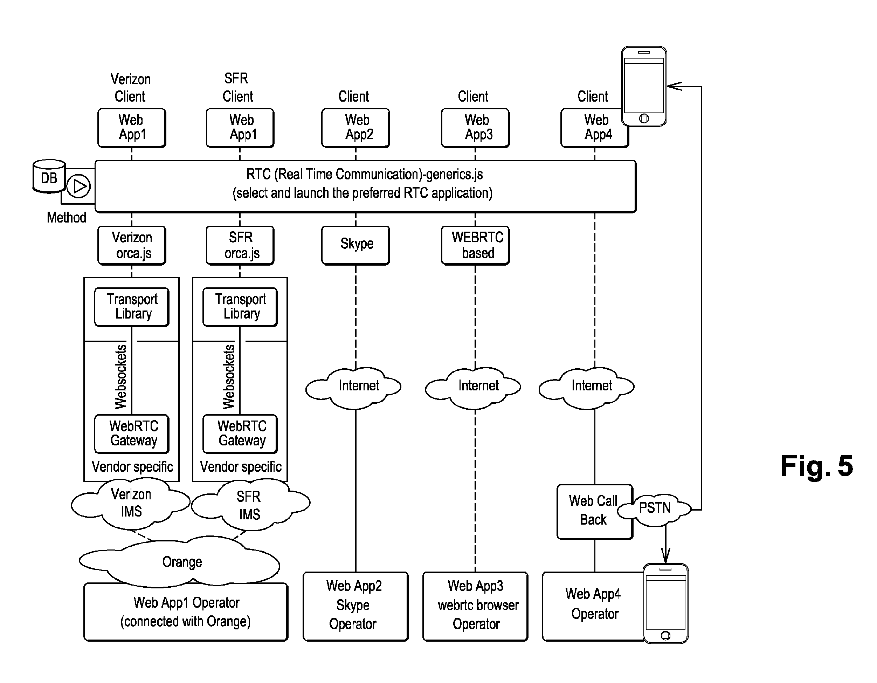

The figure 5 presents an embodiment of the present subject matter wherein a set of web servers may offer the service and hide to the web application the selection of the most efficient communication service. The aim of having a set of web servers is to enable scalability of the method.

The figure 5 presents the new level of abstraction obtains by the method object of this present subject matter ant that allows transparent setup of real time communication. The web application is on top of a layer (said RTC-generic.js in this embodiment) which hides the complexity of the different communication services that can be used by the web application. This top layer allows also hiding the choice between the different communication services. In the exemplary embodiment of the figure 5 these communication services are:

- ORCAS interface of the network device.

- Skype.

- WebRTC communication.

- Web call back.

In the embodiment presented figure 5 the web application includes in the web page the same button so called "makecall API SUBMIT". This button calls a library that interacts with the web server and uses the profiles of both parties to select and set-up the communication. These profiles can be declared in this web server, and if the profiles are not declared this library will have a default behavior.

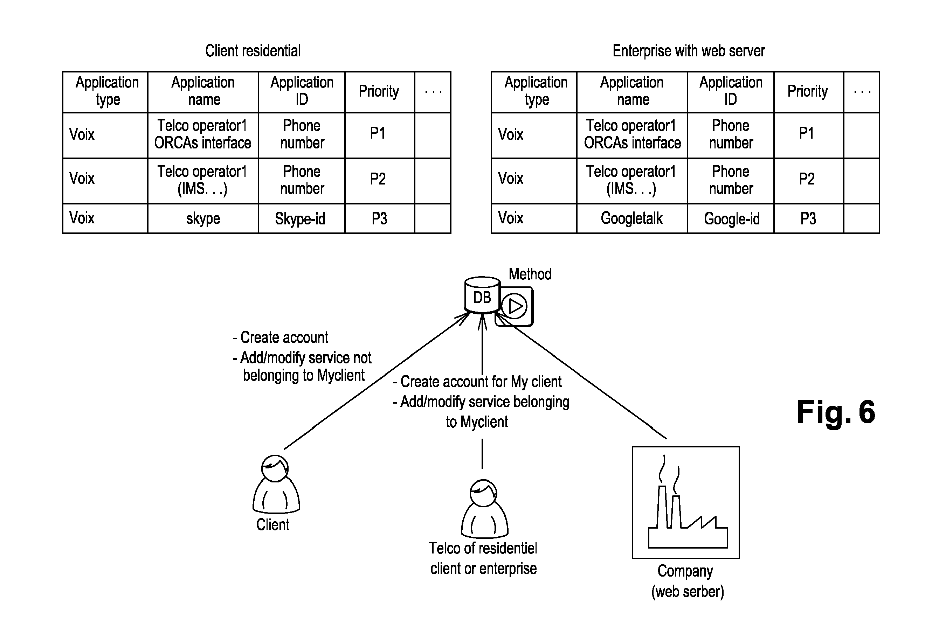

The figure 6 presents another exemplary embodiment of the data base used by the method object of the present subject matter. This data base contains the profile of each client or user. The data base, described in the figure 6, can be integrated inside the estimation applications that handle the method of estimating the communication services to be used. However the profile of each user is provisioned and/or modified either by the user himself and/or by the telecom operator of the client. This data base is integrated inside the estimation application whatever the type, residential or owner, of the application. The profile of each user contains information about the telecom operator communication services and/or the user proper communication services.

In the figure 6 another exemplary way of filling and updating the database is presented. In this figure the database is filled and updated by the client itself, by the company or by the telecommunication operator of the client or the company.

In order to estimate the communication service to use, different embodiments of the second step of estimating the communication service can be used. These different embodiments are described below and can also be combined together in the same method.

In an embodiment of the second estimation step 204 is configured to select the communication service as the common communication service with the highest priority level-A.

In an embodiment of the second estimation step 204 is configured to select the communication service as the common communication service with the highest priority level-B.

In an embodiment of the second estimation step 204 is configured to estimate at least one priority level-C, associated to at least one of the common communication services, using the following formula;

$$P_C = \frac{P_A + P_B}{2}$$

where $P_A$ is the priority level-A associated to the common communication service, $P_B$ is the priority level-B associated to the common communication service and $P_C$ is the priority level-C associated to the common communication service. After the estimation of this priority level-C the communication service to be used is estimating as being the common communication service associated to the highest priority level-C.

As an exemplary, we present the use of the method object of the present subject matter to estimate a communication service usable to establish a communication between two parties. These two parties are named Bob and Alice.

Each party is associated to different information data contained in a data base. Each party provides and stores in a data base, the communication services that it can use to communicate. Associated to each communication services, a priority level is given per category of people (for example family, friends, colleagues, other etc.). The following table gives a exemplary realization of this database:

|  | Communication service #1 | Communication service #2 |
| --- | --- | --- |
| Friends | P1 | P2 |
| Family | P0 | P0 |
| Colleagues | P0 | P1 |
| Other | P0 | P1 |

In an embodiment some other parameters can be used in the algorithm to select the usable communication service, for example: an administration state of the communication service, or a indication of on which type of device, the communication service is usable (PC, mobile, tablet).

In the same data base or in another data base each party has a list of contacts with the associated categories each contact belongs. The following table gives a exemplary realization of the independent database or the part of the previous database, of Alice:

|  | Contact #1 | Contact #n |
| --- | --- | --- |
| Name of the contact | Bob | Bill |
| Friends | Y | N |
| Family | Y | N |
| Colleagues | N | Y |
| other | N | N |

The membership to a category is based on the information obtained at called party side and not at calling party side as it is done in traditional use of contact list. If a calling party is not in the contact list of the called party, the calling party is seen as in category 'other' which is the default category.

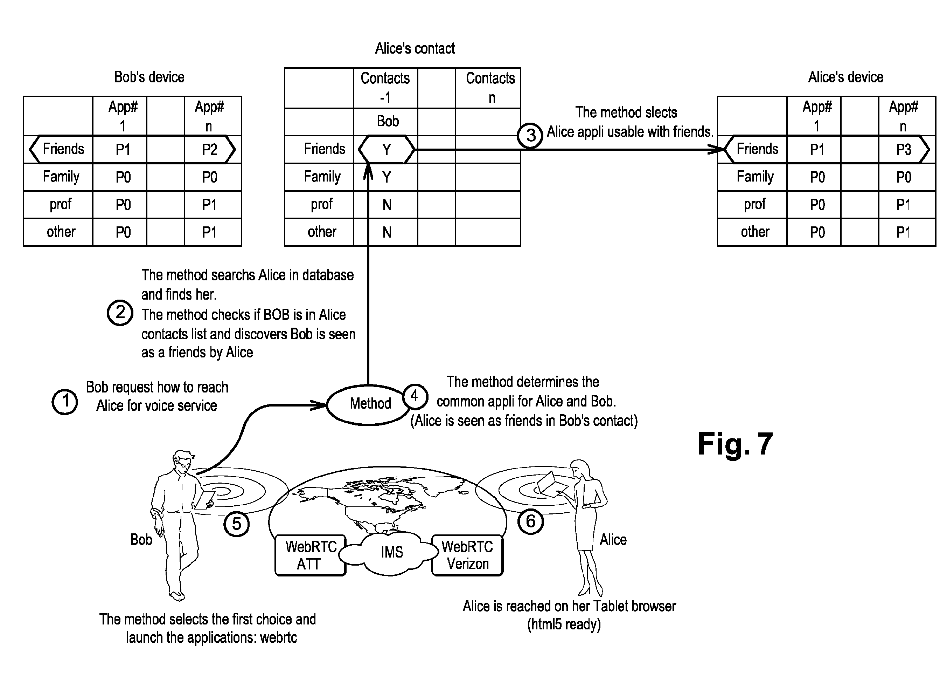

The figure 7 presents the use of the method object of the present subject matter to estimate a communication service usable to establish a communication between Bob and Alice. In order to do this estimation the following steps are realized:

The calling party (Bob) requests to reach the called party (Alice) to communicate using an application that needs a voice service. The use of voice service is an exemplary and another type of application like instant messaging or IM can be used. The calling party (Bob) is already provisioned in the data base with all his contacts and available communication services.

The method first searches the called party (Alice) profile and retrieves it. Indeed called party (Alice) has already subscribed to communication service.

Calling party (Bob) in the called party (Alice) contact list is seen as within the category friend. So algorithm first selects only the communication services usable with represents of the category friend of called party. From this list, the algorithm removes communication services with an administration state equal to off.

The method then selects the communication services of calling party (Bob) usable with the person of the category Friends. From this list, the method removes communication services with a administration state equal to off and communication services not usable in the device the calling (Bob) party is using.

Now the method has to select the preferred communication service between two lists: the list of calling party (Bob) and the list of called party (Alice). Firstly the method has to retrieve common communication services between called and calling parties by doing the intersection between the two lists. After that three different embodiments can be used to estimate a communication service usable to establish the communication.

In a first embodiment the preferred communication service is selected based on priority level of the communication services of the calling party (Bob).

In a second embodiment the preferred communication service is selected based on the priority level of the communication services of the called party (Alice). It is the preferred embodiment because we consider that the calling party (Alice) shall adapt to the preference of the called party (Bob).

In a third embodiment the preferred communication service is selected using a priority level-C, associated to at least one of communication services common to both list. This priority level-C is obtained using the following formula;

$$P_C = \frac{P_A + P_B}{2}$$

where $P_A$ is the priority level-A of the communication services associated to the calling party, $P_B$ is the priority level-B of the communication services associated to the called party and $P_C$ is the priority level-C associated to the common communication service. After that the common communication service with the highest priority level-C is selected. If there are many common communication services with the same priority level-C, the preferred communication service is selected based on the highest priority of the called-party communication service (the priority level-B).

An embodiment of the present subject matter comprises a network device. This network device is said calling party and comprises a processor and a memory coupled to the processor. In an embodiment, the network device includes one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The modules, included inside the memory, comprise a first determination module configured to determine a first list of at least one communication service usable by the calling party,

a second determination module configured to determine a second list of at least one communication service usable to reach another network device said called party,
a first estimation module configured to estimate at least one communication service common to the first and second list, this common communication service is associated to a priority level, so called priority level-A, when used by the calling party and another priority level, so called priority level-B, when used by the called party,
a second estimation module configured to estimate a communication service, usable to establish a communication link between the calling and the called party, this second estimation is made using the common communication services, the priority level-A and/or the priority level-B.

An embodiment of the present subject matter is a system. This system comprises a first network device, said calling party and a second network device, said called party. This first and second network device comprises respectively one first and second processor; and at least one first and second memory coupled to the first and second processor.

As previously explains, the functions realized by the first and second processors may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

As previously explains, the first and second memories may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The second memory of the second network device comprises a first determination module configured to determine a first list of at least one communication service usable to reach the called party.

The first memory of the first network device comprises a second determination module configured to determine a second list of at least one communication service usable by the calling party. This first memory also comprises a first estimation module configured to estimate at least one common communication service who is common to the first and second list, the common communication service is associated to a priority level, so called priority level-A, when used by the calling party and another priority level, so called priority level-B, when used by the called party and a second estimation module configured to estimate the communication service using the common communication services, the priority level-A and/or the priority level-B.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

In an embodiment of the subject matter, the method for estimating a communication service described figure 2 can be performed by programmed computers. The estimated communication service is usable to establish a communication link between at least two network devices. One of the network devices is said calling party and one other of the network devices is said called party.

The method comprises a first step 201 of determining a first list of at least one communication service usable by the calling party. The method also comprises a second step 202 of determining a second list of at least one communication service usable to reach the called party. The method further comprises a first step 203 of estimating at least one communication service common to the first and second list, the common communication service is associated to a priority level, so called priority level-A, when used by the calling party and another priority level, so called priority level-B, when used by the called party. Finally the method comprises a second step 204 of estimating the communication service using the common communication services, the priority level-A and/or the priority level-B.

## Claims

1. A method for estimating a communication service usable to establish a communication link between at least two network devices, one of the network devices is said the calling party and one other of the network devices is said called party, the method comprises;
   a first step (201) of determining a first list of at least one communication service usable to reach the called party,
   a second step (202) of determining a second list of at least one communication service usable by the calling party,
   a first step (203) of estimating at least one communication service common to the first and second list, the common communication service is associated to a priority level, so called priority level-A, when used by the calling party and another priority level, so called priority level-B, when used by the called party, and
   a second step (204) of estimating the usable communication service using the common communication services, the priority level-A and/or the priority level-B.

2. The method according to claim 1 wherein the first determination step (201) and/or the second determination step (202) is/are configured to use a data base, this data base comprises for at least one network device a plurality of communication services respectively associated to the priority level-A and/or the priority level-B.

3. The method according to claim 1 or 2 wherein;
   the second estimation step (204) is configured to select the usable communication service as the common communication service with the highest priority level-A or
   the second estimation step (204) is configured to select the usable communication service as the common communication service with the highest priority level-B or
   the second estimation step (204) is configured to estimate priority levels, so called priority level-C, associated to at least one of the common communication services using the following formula;

$$P_C = \frac{P_A + P_B}{2}$$

where $P_A$ is the priority level-A associated to the common communication service, $P_B$ is the priority level-B associated to the common communication service and $P_C$ is the priority level-C associated to the common communication service and the second estimation step (204) is also configured to select the usable communication service as being the common communication service associated to the highest priority level-C.

4. The method according to any of the previous claims wherein at least one of the network devices is using a web server and/or an internal communication system.

5. The method according to any of the previous claims wherein the priority level-A and/or the priority level-B is associated to communication services via a category associated to the called party or the calling party.

6. The method according to any of the previous claims wherein
the first step (201) of determining the first list of at least one communication service usable to reach the called party is realized by using an information describing the capabilities of the calling device and/or an information describing the capabilities of the called device and/or an information of category of the calling party,
and/or the second step (202) of determining the second list of at least one communication service usable by the calling party is realized by using an information describing the capabilities of the calling device and/or an information describing the capabilities of the called device and/or an information of category of the calling party;
the said information of category is retrieved from the contact list of the called party by reading the entry of calling party

7. A network device, said calling party, the network device comprises:

at least one processor; and
at least one memory coupled to the processor, the memory comprises:

a first determination module configured to determine a first list of at least one communication service usable to reach the called party,
a second determination module configured to determine a second list of at least one communication service usable by the calling party,
a first estimation module configured to estimate at least one communication service common to the first and second list, the common communication service is associated to a priority level, so called priority level-A, when used by the calling party and another priority level, so called priority level-B, when used by the called party, and
a second estimation module configured to estimate the usable communication service using the common communication services, the priority level-A and/or the priority level-B.

8. The network device according to claim 7 wherein the first determination module and/or the second determination module is/are configured to use a data base, this data base comprises associated to at least one network device a plurality of communication services respectively associated to the priority level-A and/or the priority level-B.

9. The network device according to claim 7 or 8 wherein;
the second estimation module is configured to select the communication service as the common communication service with the highest priority level-A or
the second estimation module is configured to select the communication service as the common communication service with the highest priority level-B or
the second estimation module is configured to estimate at least one priority level, so called priority level-C, associated to at least one of the common communication services using the following formula;

$$P_C = \frac{P_A + P_B}{2}$$

where $P_A$ is the priority level-A associated to the common communication service, $P_B$ is the priority level-B associated to the common communication service and $P_C$ is the priority level-C associated to the common communication service and
the second estimation module is also configured to select the usable communication service as being the common communication service associated to the highest priority level-C.

10. The network device, to any of the claims 7 to 9 and using a web server and/or an internal communication system.

11. System comprising;
a first network device, said calling party, the first network device comprising:

　　at least one first processor; and
　　at least one first memory coupled to the first processor,

a second network device, said called party, the second network device comprising:

　　at least second first processor; and
　　at least one second memory coupled to the second processor,

the second memory comprising:

　　a second determination module configured to determine a first list of at least one communication service usable to reach the calling party,

the first memory comprising:

　　a second determination module configured to determine a second list of at least one communication service usable by the called party,
　　a first estimation module configured to estimate at least one common communication service who is common to the first and second list, the common communication service is associated to a priority level, so called priority level-A, when used by the calling party and a priority level, so called priority level-B, when used by the called party and,
　　a second estimation module configured to estimate a communication service, usable to establish a communication link between the calling and the called party, this second estimation is made using the common communication services, the priority level-A and/or the priority level-B.

12. The system according to claim 11 wherein at least one of the network devices is using a web server and/or an internal communication system.

13. A computer-readable medium having embodied thereon a computer program for executing a method for estimating a communication service usable to establish a communication link between at least two network devices, one of the network devices is said calling party and one other of the network devices is said called party, the method comprises;
a first step (201) of determining a first list of at least one communication service usable to reach the called party,
a second step (202) of determining a second list of at least one communication service usable by the calling party,
a first step (203) of estimating at least one communication service common to the first and second list, the common communication service is associated to a priority level, so called priority level-A, when used by the calling party and another priority level, so called priority level-B, when used by the called party, and
a second step (204) of estimating the usable communication service using the common communication services, the priority level-A and/or the priority level-B.

**Fig. 1**

| Web App | Web App | Web App | Web App | — 102 |

orca.js

Transport Library | Transport Library | Transport Library

REST | Websockets | Other

101.c | WebRTC Gateway | WebRTC Gateway | WebRTC Gateway | 101.b / 101.a

Vendor specific | Vendor specific | Vendor specific

IMS Core — 103

Determination first com services — 201

Determination second com services — 202

Estimating common com services — 203

Estimating com services — 204

**Fig. 2**

Verizon Client

SFR Client

Web App 1

Web App 1

DB

Method

RTC (Real Time Communication)
(select and launch the RTC application)

Verizon orca.js

SFR orca.js

Transport Library

Transport Library

Websockets

Websockets

WebRTC Gateway

WebRTC Gateway

Vendor specific

Vendor specific

Verizon IMS

SFR IMS

Orange

Web App1 Operator
(connected with Orange)

# Fig. 3

Client of the Telecom operator

| Application type | Application name | Application ID | Priority | . . . |
|---|---|---|---|---|
| Voix | Telco operator1 ORCAs interface | SIP URI | P1 | |
| Voix | Telco operator1 (IMS. . .) | Phone number | P2 | |
| video | | | | |
| Voice HD | | | | |

Method

DB

- Create account for My client
- Add/modify service belonging to Myclient

Telco of client or enterprise

# Fig. 4

**Fig. 5**

Verizon Client — Web App1

SFR Client — Web App1

Client — Web App2

Client — Web App3

Client — Web App4

DB

Method

RTC (Real Time Communication)-generics.js
(select and launch the preferred RTC application)

Verizon orca.js

SFR orca.js

Skype

WEBRTC based

Transport Library

Transport Library

Websockets

Websockets

WebRTC Gateway

WebRTC Gateway

Vendor specific

Vendor specific

Verizon IMS

SFR IMS

Internet

Internet

Internet

Orange

Web App1 Operator
(connected with Orange)

Web App2 Skype Operator

Web App3 webrtc browser Operator

Web Call Back

PSTN

Web App4 Operator

Client residential

| Application type | Application name | Application ID | Priority | ... |
|---|---|---|---|---|
| Voix | Telco operator1 ORCAs interface | Phone number | P1 | |
| Voix | Telco operator1 (IMS...) | Phone number | P2 | |
| Voix | skype | Skype-id | P3 | |

Enterprise with web server

| Application type | Application name | Application ID | Priority | ... |
|---|---|---|---|---|
| Voix | Telco operator1 ORCAs interface | Phone number | P1 | |
| Voix | Telco operator1 (IMS...) | Phone number | P2 | |
| Voix | Googletalk | Google-id | P3 | |

Method

DB

- Create account
- Add/modify service not
  belonging to Myclient

- Create account for My client
- Add/modify service belonging
  to Myclient

Client

Telco of residentiel
client or enterprise

Company
(web serber)

# Fig. 6

EP 2 953 314 A1

Alice's contact

| Bob's device | App# 1 | | App# n |
|---|---|---|---|
| Friends | P1 | | P2 |
| Family | P0 | | P0 |
| prof | P0 | | P1 |
| other | P0 | | P1 |

| | Contacts -1 | | Contacts n |
|---|---|---|---|
| | Bob | | |
| Friends | Y | | |
| Family | Y | | |
| prof | N | | |
| other | N | | |

The method slects
③ Alice appli usable with friends.

| Alice's device | App# 1 | | App# n |
|---|---|---|---|
| Friends | P1 | | P3 |
| Family | P0 | | P0 |
| prof | P0 | | P1 |
| other | P0 | | P1 |

The method searchs Alice in database and finds her.
② The method checks if BOB is in Alice contacts list and discovers Bob is seen as a friends by Alice

① Bob request how to reach Alice for voice service

Method ④ The method determines the common appli for Alice and Bob. (Alice is seen as friends in Bob's contact)

Bob

⑤ ⑥

WebRTC ATT    IMS    WebRTC Verizon

Alice

The method selects the first choice and launch the applications: webrtc

Alice is reached on her Tablet browser (html5 ready)

**Fig. 7**

Europäisches
Patentamt

European
Patent Office

Office européen
des brevets

# EUROPEAN SEARCH REPORT

Application Number

EP 14 30 5862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 872 998 A1 (AT & T CORP [US]) 21 October 1998 (1998-10-21) * figures 2, 3A-3C * * column 6, line 14 - column 7, line 8 * * column 8, line 9 - column 16, line 52 * ----- | 1-13 | INV. H04L29/06 H04W4/00 ADD. H04L29/12 |
| X | US 2004/252715 A1 (NODA TAKURO [JP] ET AL) 16 December 2004 (2004-12-16) * figures 4, 6, 7 * * paragraph [0043] - paragraph [0058] * * paragraph [0064] - paragraph [0086] * ----- | 1-13 | |

TECHNICAL FIELDS
SEARCHED       (IPC)

H04L
H04W

The present search report has been drawn up for all claims

| Place of search | Date of completion of the search | Examiner |
|---|---|---|
| Munich | 17 November 2014 | Riegler, Jörg |

EPO FORM 1503 03.82 (P04C01)

**ANNEX TO THE EUROPEAN SEARCH REPORT**
**ON EUROPEAN PATENT APPLICATION NO.**

EP 14 30 5862

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2014

| Patent document cited in search report | | Publication date | Patent family member(s) | | Publication date |
|---|---|---|---|---|---|
| EP 0872998 | A1 | 21-10-1998 | CA | 2228981 A1 | 25-09-1998 |
| | | | EP | 0872998 A1 | 21-10-1998 |
| | | | JP | H10322397 A | 04-12-1998 |
| | | | US | 6546005 B1 | 08-04-2003 |
| | | | US | 8130751 B1 | 06-03-2012 |
| | | | US | 2002131573 A1 | 19-09-2002 |
| US 2004252715 | A1 | 16-12-2004 | CN | 1593049 A | 09-03-2005 |
| | | | CN | 101692741 A | 07-04-2010 |
| | | | EP | 1445908 A1 | 11-08-2004 |
| | | | EP | 2228966 A2 | 15-09-2010 |
| | | | JP | 2003198568 A | 11-07-2003 |
| | | | KR | 20050036861 A | 20-04-2005 |
| | | | KR | 20090092838 A | 01-09-2009 |
| | | | US | 2004252715 A1 | 16-12-2004 |
| | | | WO | 03034686 A1 | 24-04-2003 |

EPO FORM P0459

For more details about this annex : see Official Journal of the European Patent Office, No. 12/82